# EUROPÄISCHE PATENTSCHRIFT

(11) **EP 0 432 353 B1**
(45) Veröffentlichungstag und Bekanntmachung des Hinweises auf die Patenterteilung: **27.04.1994**
(21) Anmeldenummer: 90112107.9
(22) Anmeldetag: 26.06.1990
(51) Int. Cl.: H01C 7/02, H01B 1/08

(54) **Widerstandsmasse und ihre Verwendung**
Resistor paste and its use
Masse résistive et son utilisation

(30) Priorität: 14.12.1989 DE 3941283
(43) Veröffentlichungstag der Anmeldung: 19.06.1991
(73) Patentinhaber: W.C. Heraeus GmbH, D-63405 Hanau (DE)
(72) Erfinder: Burckhardt, Hans-Georg, Dr., D-6000 Frankfurt 60 (DE); Dehoust, Jürgen, D-6450 Hanau 9 (DE); Kiemel, Rainer, Dr., D-7400 Tübingen (DE); Gora, Frieder, D-8750 Aschaffenburg (DE); Modes, Christina, D-6100 Darmsatdt (DE); Kemmler-Sack, Sybille, Prof., D-7400 Tübingen (DE); Guldner, Karl-Heinz, Dr., D-8750 Aschaffenburg (DE); Schmidt, Joachim, D-6450 Hanau 1 (DE)
(74) Vertreter: Kühn, Hans-Christian

(56) Entgegenhaltungen:
- FR-A- 2 215 680
- US-A- 4 420 422

## Beschreibung

Die Erfindung betrifft eine Widerstandsmasse, die Kupfer und Ruthenium enthaltendes Oxid und Glasfritte enthält, und ihre Verwendung.

Elektrische Widerstandsmassen, die als elektrisch leitfähige Phase polynäre Oxide mit pyrochlorverwandter Kristallstruktur der allgemeinen Formel MₓM'₂₋ₓM''₂O_{7-z}, worin M Silber und/oder Kupfer, M' Wismut oder eine Mischung aus mindestens 1/2 Wismut plus bis zu 1/2 Cadmium, Blei, Yttrium, Thallium, Indium und/oder Seltenerdmetall und M'' Ruthenium, Iridium und/oder eine Mischung aus mindestens 3/4 Ruthenium und/oder Iridium und bis zu 1/4 Platin und/oder Titan und/oder Rhodium bedeuten, enthalten, werden in der deutschen Auslegeschrift 24 03 667 beschrieben. In einer Menge von 5 - 90 % bilden sie zusammen mit Glasfritten oder anderen geeigneten anorganischen Bindemitteln den Feststoffanteil der Widerstandsmassen, die - um druckfähig zu sein - außerdem einen flüssigen organischen Träger, zum Beispiel aus einer Lösung von Äthylcellulose in Terpineol, enthalten. Durch Einbrennen der Widerstandsmassen auf dielektrische Substrate, zum Beispiel aus Aluminiumoxid, bei etwa 650 - 950°C lassen sich Widerstände mit besonders niedrigem spezifischem Widerstand und einem flachen Ansprechen des spezifischen Widerstandes auf die Temperatur herstellen.

Das europäische Patent 110 167 betrifft ein Verfahren zur Herstellung von Pyrochlorverbindungen der allgemeinen Formel Bi₂₋ₓMₓB₂O_{7-z} mit M = Cadmium, Kupfer, Blei, Indium, Gadolinium und/oder Silber und B = Ruthenium und/oder Iridium, die eine große spezifische Oberfläche besitzen und für Widerstände mit relativ geringen Werten für den Temperaturkoeffizienten des Widerstandes in dem Bereich von +25°C bis +125°C geeignet sind.

Aus der deutschen Patentanmeldung P 39 14 844.0 sind Widerstandsmassen, die Oxide der allgemeinen Formel MₓM'_{y}(Pb,Bi)_{2-x-y}Ru₂O_{7-z} mit M = Kupfer und/oder Silber, M' = Calcium, Strontium und/oder Barium enthalten, bekannt. Die aus den Widerstandsmassen hergestellten Widerstandsschichten zeichnen sich durch einen niedrigen Temperaturkoeffizienten und eine nur geringe Differenz zwischen dem Temperaturkoeffizienten des Widerstandes in dem Bereich von +25° C bis +125° C und dem Temperaturkoeffizienten des Widerstandes in dem Bereich von -55° C bis +25° C aus.

Es ist die Aufgabe der Erfindung, eine in Luft einbrennbare Widerstandsmasse der eingangs charakterisierten Art für die Herstellung von Dickschicht-Widerstandselementen, die bei relativ hohem Flächenwiderstand einen hohen Temperaturkoeffizienten des Widerstandes besitzen, zu finden.

Die die Lösung der Aufgabe darstellende Widerstandsmasse ist erfindungsgemäß dadurch gekennzeichnet, daß das Oxid aus CaCu₃Ru₄O₁₂ und/oder LaCu₃Ru₄O₁₂ besteht.

Besonders bewährt hat sich die Widerstandsmasse, wenn sie aus 5 - 90 Gewichts-%, vorzugsweise 10 - 50 Gewichts-%, Oxid und 10 - 95 Gewichts-%, vorzugsweise 50 - 90 Gewichts-%, Glasfritte besteht.

Die eine perowskitähnliche Kristallstruktur besitzenden Oxide CaCu₃Ru₄O₁₂ und LaCu₃Ru₄O₁₂ können, wie aus Journal of Solid State Chemistry, 33, 257 - 261 (1980), bekannt, durch Umsetzung von Calciumcarbonat beziehungsweise Lanthanoxid mit Kupferoxid und Rutheniumoxid hergestellt werden.

Als Glasfritte kann die Widerstandsmasse jede der für diesen Zweck übliche Glasfritte enthalten. Eine Widerstandsmasse, die das Oxid CaCu₃Ru₄O₁₂ und/oder LaCu₃Ru₄O₁₂ zusammen mit einer Bleialumosilicat-Glasfritte oder Bleialumoborosilicat-Glasfritte enthält, hat sich als besonders günstig erwiesen.

Die Widerstandsmasse enthält neben den Feststoffen meist noch ein organisches Medium als flüssigen Träger und liegt dann als etwa 65 - 85 Gewichts-% Feststoffe enthaltende Paste, die zum Beispiel im Siebdruck-Verfahren auf die dielektrischen Substrate aufgebracht werden kann, vor. Der flüssige Träger besteht meist aus einer Lösung eines organischen Polymers, zum Beispiel aus Acrylharz oder Äthylcellulose, in einem organischen Lösungsmittel, zum Beispiel Terpineol oder Butylcarbitol (Butyldiglykolacetat), wie sie üblicherweise für Widerstandspasten verwendet wird.

Die Widerstandspasten werden in bekannter Weise durch Vermischen der sie bildenden Bestandteile hergestellt. Nach dem Aufdrucken der Pasten auf zum Beispiel aus Aluminiumoxid bestehende Substrate und dem Trocknen der Pasten durch Verdampfen des Lösungsmittels werden die bedruckten Substrate an Luft bei etwa 700 - 900°C eingebrannt.

Die aus der Widerstandsmasse gemäß der Erfindung hergestellten Widerstandsschichten zeichnen sich durch hohe positive Temperaturkoeffizienten des Widerstandes aus. Bei einem Flächenwiderstand von etwa 10 - 500 Ohm/Quadrat besitzen sie einen Temperaturkoeffizienten des Widerstandes, der in dem Bereich von +25° C bis +125° C größer als 1000 ppm/K ist.

Die Widerstandsmasse eignet sich daher besonders für die Herstellung der temperaturabhängigen Widerstandsschichten in Sensoren zur Temperaturmessung.

Zur näheren Erläuterung werden in den folgenden Beispielen die Herstellung von als Widerstandspasten vorliegenden Widerstandsmassen gemäß der Erfindung und von Widerstandsschichten aus diesen Pasten beschrieben.

Die Schichtdicke d [µm], der Flächenwiderstand R_{f}, [Ω/□], und der Temperaturkoeffizient des Widerstandes in dem Bereich von +25°C bis +125°C, HTCR [ppm/K] ("Hot Temperature Coefficient of Resistance"), der durch Einbrennen der Pasten auf Aluminiumoxid-Substrate erhaltenen Widerstandsschichten werden angegeben.

### Beispiel 1

Eine Mischung aus 22,2 Gewichts-% CaCu₃Ru₄O₁₂ und 77,8 Gewichts-% einer Glasfritte aus 62 Gewichts-% PbO, 29 Gewichts-% SiO₂, 6 Gewichts-% Al₂O₃ und 3 Gewichts-% CdO mit einer durchschnittlichen Korngröße von 3 - 6 Mikrometer und eine 5 %ige Lösung von Äthylcellulose in Terpineol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große Al₂O₃-Substrate gedruckt, 10 Minuten lang an Luft bei 150°C getrocknet und dann in einem Durchlaufofen 10 Minuten lang bei 850°C eingebrannt (Verweilzeit im Ofen insgesamt 1 Stunde).

Die Dicke der getrockneten Schichten, der auf eine Dicke der getrockneten Schichten von 25 Mikrometer bezogene Flächenwiderstand und der Temperaturkoeffizient des Widerstandes der so hergestellten Widerstandsschichten werden in der Tabelle angegeben.

### Beispiel 2

Eine Mischung aus 22,2 Gewichts-% LaCu₃Ru₄O₁₂ und 77,8 Gewichts-% einer Glasfritte aus 62 Gewichts-% PbO, 29 Gewichts-% SiO₂, 6 Gewichts-% Al₂O₃ und 3 Gewichts-% CdO mit einer durchschnittlichen Korngröße von 3 - 6 Mikrometer und eine 5 %ige Lösung von Äthylcellulose in Terpineol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große Al₃O₃-Substrate gedruckt, 10 Minuten lang an Luft bei 150°C getrocknet und dann in einem Durchlaufofen 10 Minuten lang bei 850°C eingebrannt (Verweilzeit im Ofen insgesamt 1 Stunde).

Die Dicke der getrockneten Schichten, der auf eine Dicke der getrockneten Schichten von 25 Mikrometer bezogene Flächenwiderstand und der Temperaturkoeffizient des Widerstandes der so hergestellten Widerstandsschichten werden in der Tabelle angegeben.

### Beispiel 3

Eine Mischung aus 22,2 Gewichts-% LaCu₃Ru₄O₁₂ und 77,8 Gewichts-% einer Glasfritte aus 49,5 Gewichts-% PbO, 34 Gewichts-% SiO₂ und 8,4 Gewichts-% B₂O₃, 3,1 Gewichts-% Al₂O₃ und 5 Gewichts-% CaO mit einer durchschnittlichen Korngröße von 3 - 6 Mikrometer und eine 5 %ige Lösung von Äthylcellulose in Terpineol werden im Verhältnis 3 : 1 auf einem Walzenstuhl zu einer Paste verarbeitet. Die Paste wird durch ein Edelstahl-Sieb (200 mesh) auf 50 x 50 x 0,63 Millimeter große Al₂O₃-Substrate gedruckt, 10 Minuten lang an Luft bei 150°C getrocknet und dann in einem Durchlaufofen 10 Minuten lang bei 850°C eingebrannt (Verweilzeit im Ofen insgesamt 1 Stunde).

Die Dicke der getrockneten Schichten, der auf eine Dicke der getrockneten Schichten von 25 Mikrometer bezogene Flächenwiderstand und der Temperaturkoeffizient des Widerstandes der so hergestellten Widerstandsschichten werden in der Tabelle angegeben.

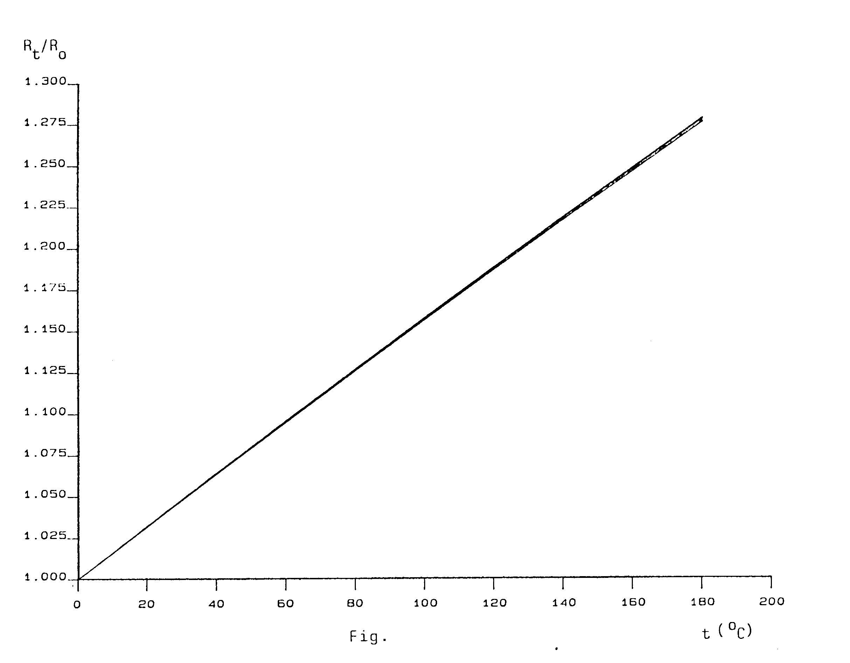

Um das Temperaturverhalten des elektrischen Widerstandes der nach Beispiel 3 hergestellten Widerstandsschichten zu charakterisieren, wird der Widerstand im Bereich von 0°C bis 180°C unter Anwendung eines Stromes von 0,1 mA bestimmt. Die Abhängigkeit des Widerstandes, ausgedrückt durch das Verhältnis aus dem Widerstand bei der Temperatur t [°C] und dem Widerstand bei 0°C, Rₜ/Rₒ, wird in der Figur dargestellt.

**Tabelle**

| Beispiel | Oxid/Glas [Gew.-Teile] | d [µm] | R_{f}[Ω/□] | HTCR [ppm/K] |
|---|---|---|---|---|
| 1 | 22,2/77,8 | 24 | 64,6 | 2247 |
| 2 | 22,2/77,8 | 24 | 179 | 2154 |
| 3 | 22,2/77,8 | 28 | 353 | 1530 |

## Patentansprüche

1. Widerstandsmasse, die Kupfer und Ruthenium enthaltendes Oxid und Glasfritte enthält, dadurch gekennzeichnet, daß das Oxid aus CaCu₃Ru₄O₁₂ und/oder LaCu₃Ru₄O₁₂ besteht.

2. Widerstandsmasse nach Anspruch 1, dadurch gekennzeichnet, daß sie 5 - 90 Gewichts-% Oxid und 10 - 95 Gewichts-% Glasfritte enthält.

3. Widerstandsmasse nach Anspruch 2, dadurch gekennzeichnet, daß sie 10 - 50 Gewichts-% Oxid und 50 - 90 Gewichts-% Glasfritte enthält.

4. Widerstandsmasse nach einem der Ansprüche 1 bis 3, dadurch gekennzeichnet, daß die Glasfritte eine Bleialumosilicat-Glasfritte ist.

5. Widerstandsmasse nach einem der Ansprüche 1 bis 3, dadurch gekennzeichnet, daß die Glasfritte eine Bleialumoborosilicat-Glasfritte ist.

6. Widerstandsmasse nach einem der Ansprüche 1 bis 5, dadurch gekennzeichnet, daß sie CaCu₃Ru₄O₁₂ und eine Bleialumosilicat- oder Bleialumoborosilicat-Glasfritte enthält.

7. Widerstandsmasse nach einem der Ansprüche 1 bis 5, dadurch gekennzeichnet, daß sie LaCu₃Ru₄O₁₂ und eine Bleialumosilicat- oder Bleialumoborosilicat-Glasfritte enthält.

8. Widerstandsmasse nach einem der Ansprüche 1 bis 7, dadurch gekennzeichnet, daß sie zusätzlich ein organisches Medium als flüssigen Träger enthält.

9. Verwendung der Widerstandsmasse nach einem der Ansprüche 1 bis 8 für die Herstellung der temperaturabhängigen Widerstandsschichten in Sensoren zur Temperaturmessung.

## Claims

1. A resistance material which contains oxide - containing copper and ruthenium - and glass frit, characterised in that the oxide consists of CaCu₃Ru₄O₁₂ and/or LaCu₃Ru₄O₁₂.

2. A resistance material according to Claim 1, characterised in that it contains 5 - 90 % by weight oxide and 10 - 95 % by weight glass frit.

3. A resistance material according to Claim 2, characterised in that it contains 10 - 50 % by weight oxide and 50 - 90 % by weight glass frit.

4. A resistance material according to one of Claims 1 to 3, characterised in that the glass frit is a lead aluminosilicate glass frit.

5. A resistance material according to one of Claims 1 to 3, characterised in that the glass frit is a lead aluminoborosilicate glass frit.

6. A resistance material according to one of Claims 1 to 5, characterised in that it contains CaCu₃Ru₄O₁₂ and a lead aluminosilicate or lead aluminoborosilicate glass frit.

7. A resistance material according to one of Claims 1 to 5, characterised in that it contains LaCu₃Ru₄O₁₂ and a lead aluminosilicate or lead aluminoborosilicate glass frit.

8. A resistance material according to one of Claims 1 to 7, characterised in that it contains additionally an organic medium as fluid carrier.

9. The use of the resistance material according to one of Claims 1 to 8 for the production of the temperature-dependent resistance layers in sensors for temperature measurement.

## Revendications

1. Masse résistive contenant un oxyde contenant du cuivre et du ruthénium et une fritte de verte, caractérisée en ce que l'oxyde se compose de CaCu₃Ru₄O₁₂ et/ou de LaCu₃Ru₄O₁₂.

2. Masse résistive selon la revendication 1, caractérisée en ce qu'elle contient 5 à 90% en poids d'oxyde et 10 à 95% en poids de fritte de verre.

3. Masse résistive selon la revendication 2, caractérisée en ce qu'elle contient 10 à 50% en poids d'oxyde et 50 à 90% en poids de fritte de verre.

4. Masse résistive selon l'une des revendications 1 à 3, caractérisée en ce que la fritte vitreuse est une fritte de verte d'alumosilicate de plomb.

5. Masse résistive selon l'une des revendications 1 à 3, caractérisée en ce que la fritte de verre est une fritte de verre d'alumoborosilicate de plomb.

6. Masse résistive selon l'une des revendications 1 à 5, caractérisée en ce qu'elle contient du CaCu₃Ru₄O₁₂ et une fritte de verte d'alumosilicate de plomb ou d'alumoborosilicate de plomb.

7. Masse résistive selon l'une des revendications 1 à 5, caractérisée en ce qu'elle contient du LaCu₃Ru₄O₁₂ et une fritte de verte d'alumosilicate de plomb ou d'alumoborosilicate de plomb.

8. Masse résistive selon l'une des revendications 1 à 7, caractérisée en ce qu'elle contient en outre un milieu organique comme véhicule liquide.

9. Utilisation de la masse résistive selon l'une des revendications 1 à 8, pour la fabrication des couches résistives, variant avec la température, de capteurs de température.
